# DEMANDE DE BREVET EUROPEEN

(11) **EP 1 429 300 A1**
(43) Date de publication de la demande: **16.06.2004**
(21) Numéro de dépôt: 03104613.9
(22) Date de dépôt: 10.12.2003
(51) Int. Cl.: G08B 13/24, G07C 9/00, B60R 25/00, G01S 13/82

(54) **Procédé pour la localisation d'un dispositif portatif de système de sécurisation mains-libres et système de sécurisation mains-libres associé**

(30) Priorité: 12.12.2002 FR 0215955
(71) Demandeur: Valeo Securité Habitacle S.A.S., 94042 Créteil (FR)
(72) Inventeur: Haydar, Adham, 94042, Créteil (FR)
(74) Mandataire: Hervouet, Sylvie

(57) **Abrégé**

La présente invention est relative à la commande d'un système de sécurisation du type mains-libres d'un espace clos, dans lequel un équipement fixe (F) par rapport à l'espace clos, peut localiser un dispositif portatif (M) par rapport à au moins deux zones de localisation (Z₁, Z₂) définies comme des partitions d'une zone d'observation selon la distance par rapport à l'espace clos.

Selon l'invention, l'équipement fixe (F) émet un code (S_{E}) comprenant au moins deux séquences successives de puissances distinctes définies de façon à ce que la séquence émise à la puissance maximum puisse être reçue dans une zone de réception comprenant les deux zones de localisation (Z₁, Z₂), et la séquence émise à la puissance minimum puisse être reçue dans une zone de réception comprenant seulement la zone de localisation la plus proche (Z₁) de l'espace clos; sur réception par le dispositif portatif (M) dau moins une séquence du code, on extrait une indication relative à la séquence de plus faible puissance reçue ; et le dispositif portatif (M) émet vers l'équipement fixe (F) un signal de réponse comprenant ladite indication ; L'équipement fixe peut alors déduire la zone de localisation dans laquelle le dispositif portatif (M) est positionné.

## Description

La présente invention est relative aux systèmes de type mains-libres pour la sécurisation d'un espace clos permettant de commander à distance certaines fonctionnalités telles que le déverrouillage ou le verrouillage d'un ouvrant.

Les systèmes mains-libres sont bien connus pour le contrôle d'accès à un véhicule automobile. Ils comprennent classiquement un équipement d'identification situé à bord du véhicule automobile, adapté pour l'échange de signaux électromagnétiques, dans une ou plusieurs zones prédéfinies, avec un identifiant portatif se présentant, par exemple, sous forme de clé ou de badge au format d'une carte de crédit.

Pour permettre l'accès au véhicule, on procède à une décondamnation (ou déverrouillage) automatique de la serrure d'au moins un ouvrant, voire à l'ouverture automatique de cet ouvrant, lorsque l'identifiant porté par l'utilisateur a été authentifié par l'équipement d'identification situé sur le véhicule suite à l'échange de signaux électromagnétiques. Cet échange consiste généralement en un signal d'interrogation émis par l'équipement d'identification, auquel l'identifiant va répondre avec un signal de réponse contenant des données d'identification. L'équipement d'identification pourra par la suite comparer ces données d'identification avec ses propres données, et autoriser ou non la décondamnation ou l'ouverture automatique de l'ouvrant en fonction du résultat de la comparaison.

Dans certains systèmes mains-libres connus, le signal d'interrogation est émis en basse fréquence, typiquement à 125 KHz. Dans d'autres systèmes, ce signal d'interrogation est émis en haute fréquence, typiquement de l'ordre de 433 MHz. Dans les deux types de systèmes, le signal de réponse est généralement émis en haute fréquence, typiquement également à 433 MHz.

On connaît par ailleurs du document DE 100 64 141 un système mains libres dans lequel on prévoit en outre de commander d'autres fonctionnalités dites de confort telles que, lors de l'approche de l'utilisateur, l'allumage du plafonnier, la désactivation de l'alarme, le réglage du siège et des rétroviseurs, ou encore, lorsque l'utilisateur s'éloigne de son véhicule, l'activation de l'alarme et la signalisation sonore et/ou visuelle qu'une condamnation centralisée des ouvrants a bien été effectuée. Pour ce faire, il est nécessaire de pouvoir détecter la position de l'identifiant portatif, et d'affecter les fonctionnalités en fonction de cette position. Dans ce système connu, la position de l'identifiant est déterminée à l'aide d'un détecteur de proximité qui mesure le temps de propagation entre une onde émise par ce détecteur et l'onde qui va se réfléchir.

L'inconvénient majeur de ce type de systèmes réside dans le fait qu'il est nécessaire de prévoir des dispositifs supplémentaires (détecteurs de proxi mité) pour pouvoir déterminer la position de l'identifiant.

En outre, dans d'autres systèmes connus pour lesquels on ne s'intéresse qu'au déverrouillage, voire à l'ouverture d'un ouvrant, l'échange de signaux électromagnétiques est généralement initié suite à l'actionnement par l'utilisateur d'un moyen de détection de présence situé au voisinage de l'ouvrant, par exemple au niveau de la poignée de l'ouvrant. Différents types de moyens de détection de présence existent, qui vont du bouton mécanique fonctionnant comme un interrupteur, aux capteurs de type tactile, ou encore de type optique lesquels détectent la coupure d'un faisceau optique par la main de l'utilisateur. En variante, on peut également utiliser un capteur dit d'approche, qui détecte la présence de la main d'un utilisateur au voisinage de l'ouvrant, de manière à déclencher au plus tôt la phase d'authentification.

Ainsi, les moyens de détection de présence généralement prévus nécessitent une manipulation de la part de l'utilisateur, ou à tout le moins un geste particulier de ce dernier ( approche de la main) dans le cas d'un capteur d'approche.

Comme on le comprend aisément, ceci rend le système peu satisfaisant dans le cas où l'utilisateur qui veut avoir accès au véhicule, par exemple au coffre du véhicule, a les mains encombrées.

Il est donc souhaitable de chercher des améliorations permettant le déverrouillage ou l'ouverture automatique d'au moins un ouvrant du véhicule, et ce, de manière complètement transparente pour l'utilisateur, c'est-à-dire sans que ce dernier n'ait à effectuer une quelconque manipulation ou geste particulier, sauf à s'approcher du véhicule.

Une amélioration du type précédant a déjà été décrite par la Demanderesse dans le document EP 1 143 092. Cette amélioration consiste à prévoir, en remplacement des moyens de détection de présence mentionnés précédemment, un capteur de détection d'obstacle qui émet des signaux de type ultrasonores ou radioélectriques, et des moyens de réception aptes à détecter la réflexion ou l'écho des signaux émis et à en déduire une information sur la présence d'un obstacle et sur la distance à laquelle cet obstacle se trouve par rapport au véhicule. Si l'obstacle est un utilisateur se rapprochant de l'ouvrant, plusieurs mesures des signaux reçus en écho permettent de détecter le sens de déplacement de cet utilisateur. Lorsque le système juge qu'un utilisateur semble avoir l'intention d'ouvrir l'ouvrant du fait qu'il se déplace selon une trajectoire traduisant son approche vers l'ouvrant, l'équipement d'identification situé à bord du véhicule initie l'échange de signaux pour vérifier que l'utilisateur est bien porteur d'un identifiant, et, le cas échéant, pour authentifier cet identifiant en vue d'autoriser la décondamnation ou l'ouverture automatique de l'ouvrant.

Ici encore, l'inconvénient majeur de la solution précédente réside dans la nécessité d'utiliser un dispositif supplémentaire, à savoir le capteur de détection d'obstacle, par rapport aux composantes de base d'un système mains-libres, pour réaliser le suivi de trajectoire d'un utilisateur, ce qui vient inévitablement grever le coût total du système.

La présente invention a pour but de proposer une nouvelle solution utilisant au maximum les composantes déjà existantes d'un système mains-libres pour déterminer la position d'un identifiant portatif.

Plus précisément, la présente invention a pour objet un procédé de commande d'un système de sécurisation d'un espace clos, par exemple un véhicule automobile, le système étant du type mains-libres comportant un équipement fixe par rapport à l'espace clos, adapté pour échanger avec un dispositif portatif présent dans une zone d'observation déterminée, des signaux radiofréquences en vue d'une authentification, le procédé étant du type comportant une phase de localisation au cours de laquelle est déterminée la position du dispositif portatif par rapport à au moins deux zones de localisation définies comme des partitions de la zone d'observation selon la distance par rapport à l'espace clos, caractérisé en ce que la phase de localisation comporte les étapes suivantes :
- Emission depuis l'équipement fixe d'un code comprenant au moins deux séquences successives de puissances distinctes définies de façon à ce que la séquence émise à la puissance maximum puisse être reçue dans une zone de réception comprenant les deux zones de localisation, et la séquence émise à la puissance minimum puisse être reçue dans une zone de réception comprenant seulement la zone de localisation la plus proche de l'espace clos;
- Réception par le dispositif portatif d'au moins une séquence du code, et extraction d'une indication relative à la séquence de plus faible puissance reçue ;
- Emission depuis le dispositif portatif vers l'équipement fixe d'un signal de réponse comprenant ladite indication ;
- Réception par l'équipement fixe du signal de réponse, extraction de ladite indication et déduction de la zone de localisation dans laquelle le dispositif portatif est positionné.

Ainsi, il est possible de localiser le dispositif portatif en utilisant uniquement les parties émission et réception déjà existantes de l'équipement fixe et du dispositif portatif, et en y associant un protocole particulier de communication.

Il est alors possible de déclencher une phase de commande spécifique d'un organe particulier en fonction de la zone de localisation dans laquelle le dispositif portatif a été positionné.

On peut également réitérer plusieurs fois les étapes de la phase de localisation, de manière à effectuer un suivi de la trajectoire du dispositif portatif, et décider de la conduite à suivre pour la commande en fonction de cette trajectoire. Ainsi, dans le cas où l'organe considéré est un ouvrant lié à l'espace clos, par exemple un coffre de véhicule automobile, ou encore la porte d'un garage, différentes commandes en fonction de la trajectoire peuvent être opérées, telles que le déverrouillage de ouvrant si la trajectoire montre une progression du dispositif portatif vers l'ouvrant, ou encore le verrouillage automatique si la trajectoire révèle un éloignement du dispositif portatif par rapport à cet ouvrant.

La présente invention a également pour objet un système de sécurisation d'un espace clos, par exemple un véhicule automobile, le système étantdu type mains-libres comportant un équipement fixe par rapport à l'espace clos, adapté pour échanger avec un dispositif portatif présent dans une zone d'observation déterminée, des signaux radiofréquences en vue d'une authentification, le système comprenant des moyens de détermination de la position du dispositif portatif par rapport à au moins deux zones de localisation définies comme des partitions de la zone d'observation selon la distance par rapport à l'espace clos, caractérisé en ce que :
- l'équipement fixe comporte des moyens d'émission d'un code comprenant au moins deux séquences successives de puissances distinctes définies de façon à ce que la séquence émise à la puissance maximum puisse être reçue dans une zone de réception comprenant les deux zones de localisation, et la séquence émise à la puissance minimum puisse être reçue dans une zone de réception comprenant seulement la zone de localisation la plus proche de l'espace clos;
- le dispositif portatif comporte d'une part, des moyens de réception d'au moins une séquence du code, et d'extraction d'une indication relative à la séquence de plus faible puissance reçue, et d'autre part, des moyens d'émission vers l'équipement fixe d'un signal de réponse comprenant ladite indication; et
- l'équipement fixe comporte en outre des moyens de réception du signal de réponse, des moyens d'extraction de ladite indication et de déduction de la zone de localisation dans laquelle le dispositif portatif est positionné.

D'autres aspects de l'invention seront mieux compris au vu de la description suivante d'un exemple non limitatif, faite en référence aux figures annexées dans lesquelles :
- la figure 1 illustre schématiquement l'invention appliquée à un système mains-libre permettant la commande d'un ouvrant arrière de véhicule automobile ;
- la figure 2a illustre les échanges de signaux effectués conformément à un premier mode de réalisation du procédé selon l'invention ;
- la figure 2b illustre les échanges de signaux effectués conformément à deuxième mode de réalisation du procédé selon l'invention ;
- la figure 3 illustre schématiquement l'utilisation du procédé selon l'invention pour le suivi de trajectoire d'un dispositif portatif ;
- la figure 4 illustre les échanges de signaux conformément à l'invention dans le cas d'une trajectoire d'approche du dispositif portatif.
- La figure 5 illustre sous forme de synoptique simplifié un circuit d'émission permettant de modifier la puissance d'émission dun signal depuis l'équipement fixe.

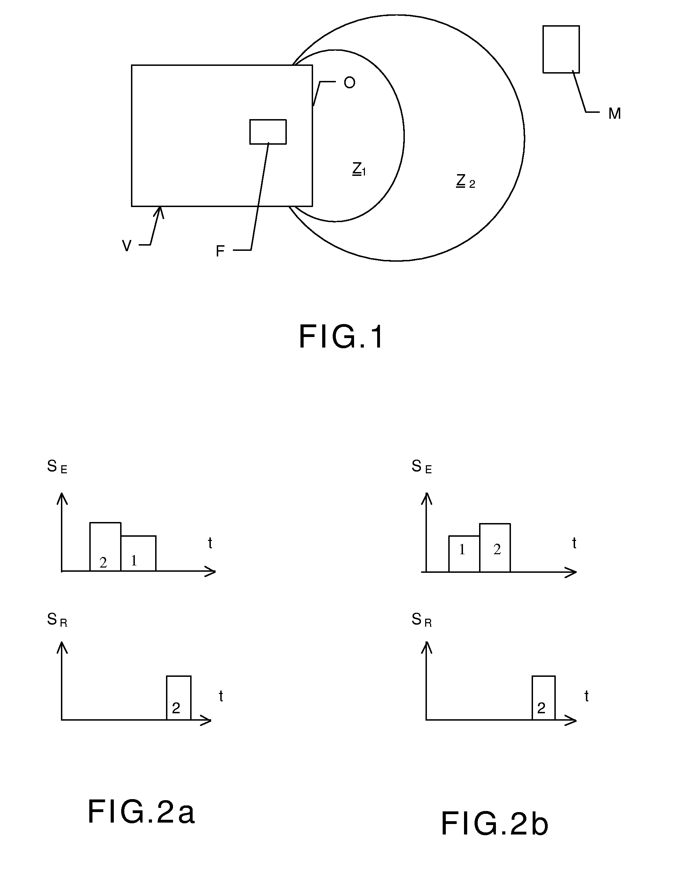

Sur la figure 1, on a représenté schématiquement les éléments constitutifs d'un système mains-libres permettant notamment la commande d'un ouvrant O, par exemple d'un coffre ou hayon d'un véhicule automobile V. Par commande, on doit comprendre ici le déverrouillage (voire l'ouverture automatique) et/ou le verrouillage (voire la fermeture automatique) de l'ouvrant. L'ouvrant peut également être constitué par n'importe quelle porte du véhicule automobile ou trappe d'accès à une enceinte du véhicule. En outre, on pourrait considérer également un espace clos autre qu'un véhicule automobile, tel qu'un garage.

Le système mains-libres comporte classiquement un équipement fixe F lié au véhicule V, et un dispositif portatif M destiné à accompagner l'utilisateur. Lors d'un processus classique d'authentification pour l'accès au coffre O du véhicule, l'équipement fixe F est adapté pour échanger avec le dispositif portatif M des signaux radiofréquences dès lors que le dispositif portatif M est présent dans une zone d'observation définie au voisinage de l'ouvrant O. Plus précisément, l'équipement fixe F émet de façon cyclique un signal d'interrogation, par exemple à basse fréquence. Lorsque le dispositif portatif M est situé dans la zone d'observation, il est réveillé par ce signal d'interrogation, et émet en réponse un signal contenant une identification permettant à l'équipement fixe F d'authentifier le dispositif portatif, et d'autoriser ou non l'accès.

Dans le cadre de l'invention, il est prévu également de pouvoir localiser le dispositif portatif M par rapport à au moins deux zones de localisation Z₁ et Z₂, ces deux zones étant choisies de manière à réaliser une partition de la zone d'observation selon la distance par rapport au véhicule, c'est-à-dire correspondant à des tranches de la zone d'observation plus ou moins éloignées du véhicule comme le montre la figure 1. Le terme « partition » doit donc ici être pris dans sa définition mathématique, à savoir comme le partage d'un ensemble (ici la zone d'observation) en parties non vides, disjointes deux à deux, et dont la réunion reconstitue cet ensemble.

Conformément à l'invention, et comme illustré sur la figure 2a, l'équipement fixe F émet un code S_{E}, de préférence en basse fréquence, composé d'au moins deux séquences successives à deux puissances distinctes. Les puissances d'émission sont définies de sorte que la puissance maximum, correspondant dans l'exemple de la figure 2a à la première séquence émise, puisse être réceptionnée dans les deux zones de localisation Z₁ et Z₂, alors que la puissance minimum, correspondant dans l'exemple à la deuxième séquence émise du code S_{E}, ne puisse être réceptionnée que dans la zone Z₁ qui est la plus proche du véhicule V. En conséquence, trois cas de figures se présentent selon l'endroit où le dispositif portatif M se trouve :
- le dispositif portatif M est, comme illustré sur la figure 1, en dehors de la zone d'observation. Dans ce cas, il ne peut recevoir le code S _{E}, et n'émet donc pas à son tour de signal de réponse ;
- le dispositif portatif est dans la zone de localisation Z₂ : Dans ce cas, il ne reçoit que la séquence du code S_{E} émise à la puissance maximum;
- le dispositif portatif est dans la zone de localisation Z₁ : Dans ce cas, il reçoit l'ensemble du code S_{E}.

Lorsque le dispositif portatif M reçoit au moins une séquence du code, l'invention prévoit une étape d'extraction, par le dispositif portatif, d'une indication relative à la séquence de plus faible puissance reçue, lequel émet à son tour, de préférence à haute fréquence, un signal de réponse S_{R} à destination de l'équipement fixe F, ce signal de réponse comprenant l'indication extraite. Dans le cas de la figure 2a, on a considéré un dispositif portatif M situé dans la zone de localisation Z₂, de sorte que le signal de réponse S_{R} comprend l'indication relative à la séquence émise à la puissance maximum.

On peut prévoir, comme dans le cas représenté sur la figure 2a, que les séquences du code S_{E} soient émises successivement selon des puissances décroissantes. Ainsi, il suffit que le dispositif portatif M extraie l'indication relative à la séquence reçue en dernier.

En variante telle que représentée sur la figure 2b, les séquences du code S_{E} sont émises successivement selon des puissances croissantes. Ainsi, le dispositif portatif M peut se limiter à extraire l'indication relative à la séquence reçue en premier.

Lorsque l'équipement fixe F reçoit le signal de réponse S_{R}, il peut extraire l'indication transmise, et déduire précisément la zone de localisation dans laquelle se trouve le dispositif portatif M.

On peut alors prévoir une phase de commande spécifique d'un organe, fonction de cette zone de localisation.

Par exemple, on peut prévoir que, lorsque le dispositif portatif M est dans la zone Z₂, on commande la lumière intérieure du véhicule pour aider l'utilisateur à se diriger. Puis, lorsque le dispositif portatif M est dans la zone Z_{1,} on déclenche les étapes nécessaires au déverrouillage, voire à l'ouverture automatique de l'ouvrant.

L'authentification à proprement dit du dispositif portatif M par l'équipement fixe peut être faite par le biais du même signal de réponse S_{R}. Ainsi, un même processus d'interrogation/réponse permet d'une part, de localiser le dispositif, et d'autre part, de l'authentifier. En variante, on peut prévoir que l'authentification ne sera initiée que lorsque le dispositif portatif M est localisé dans une zone de localisation définie, de préférence la zone Z₁ qui est la plus proche du véhicule.

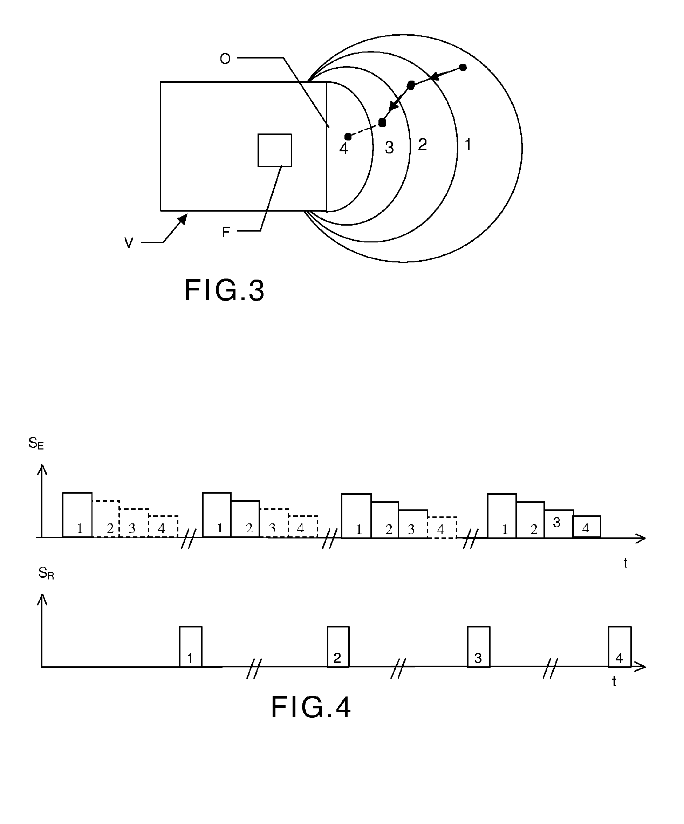

On décrit à présent, en référence aux figures 3 et 4, une application tout particulièrement intéressante du procédé selon l'invention. Dans cette application, les étapes du procédé de localisation telles que décrites précédemment sont réitérées de façon à pouvoir effectuer plusieurs localisations successives du dispositif portatif et d'en déduire un suivi de trajectoire.

En effet, un problème majeur des systèmes totalement mains-libres, c'est-à-dire ne nécessitant aucune action particulière de l'utilisateur, réside dans le fait que le système ne sait pas toujours faire la distinction entre un utilisateur qui s'approche d'un véhicule sans avoir forcément l'intention d'y accéder, et un utilisateur qui veut réellement ouvrir son véhicule. Ce problème est d'autant plus délicat lorsque l'ouvrant considéré est un coffre ou hayon de véhicule, car il existe bon nombre de situations dans lesquelles l'utilisateur va s'approcher de son véhicule, vers la porte conducteur, en passant tout près du coffre, ce qui risque de se traduire par un déverrouillage voire une ouverture inopinée du coffre.

L'invention permet de résoudre ce problème car il est possible de détecter la véritable intention d'un utilisateur porteur d'un identifiant en analysant sa trajectoire de déplacement, et ce de manière simple et peu coûteuse.

Les figures 3 et 4 illustrent la situation d'un utilisateur avec son dispositif portatif se déplaçant vers son véhicule V en direction de l'ouvrant O avec intention d'ouvrir cet ouvrant. L'utilisateur est ici schématisé par plusieurs points reliés entre eux selon la trajectoire effectivement suivie par cet utilisateur.

La zone d'observation est ici séparée en quatre zones possibles de localisation notées de 1 à 4. Le code S _{E} émit, de façon cyclique, par l'équipement fixe F comporte donc quatre séquences émises à quatre puissances distinctes, de préférence successivement selon des puissances décroissantes.

Lors de la première trame de code émise, le dispositif portatif est dans la zone 1, de sorte qu'il ne reçoit que la séquence notée 1 qui est à la puissance maximum, de sorte que le signal de réponse contient l'indication relative à cette zone de localisation 1.

Lors de la seconde trame, le dispositif portatif est dans la zone 2, de sorte qu'il reçoit les séquences notées 1 et 2. Dans le signal de réponse, il ne retient que l'indication relative à la dernière séquence reçue (la plus petite puissance qu'il reçoit) de sorte que le signal de réponse contient l'indication relative à cette zone de localisation 2.

Lors de la troisième trame, le dispositif portatif est dans la zone 3, de sorte qu'il reçoit les séquences notées 1, 2 et 3. Dans le signal de réponse, il ne retient que l'indication relative à la dernière séquence reçue (la plus petite puissance qu'il reçoit) de sorte que le signal de réponse contient l'indication relative à cette zone de localisation 3.

Enfin, lors de la quatrième trame, le dispositif portatif est dans la zone 4, de sorte qu'il reçoit le code en entier. Dans le signal de réponse, il ne retient que l'indication relative à la dernière séquence reçue (la plus petite puissance qu'il reçoit) de sorte que le signal de réponse contient l'indication relative à cette zone de localisation 4.

La trajectoire ainsi relevée montre sans ambiguïté une approche d'un utilisateur en vue d'ouvrir le coffre. La phase de commande qui suit permettra donc un déverrouillage, voire une ouverture automatique du coffre. L'authentification proprement dite du dispositif portatif peut être faite à chaque localisation de l'identifiant. De préférence cependant, on attendra la dernier moment (lorsque l'identifiant est dans la zone 4 et que le suivi de trajectoire révèle une approche) pour déclencher cette authentification.

D'autres scénarii peuvent ainsi être déclinés tels que la fermeture automatique et le verrouillage du coffre lorsque la trajectoire révèle un éloignement du dispositif portatif.

En revanche, des trajectoires qui se révèleraient être sensiblement parallèles à l'ouvrant ne déclencheront aucune ouverture de coffre.

Pour la mise en oeuvre du procédé selon l'invention, il est nécessaire de prévoir, en ce qui concerne l'équipement fixe, d'une part, des moyens d'émission du code avec les séquences de puissances distinctes, et d'autre part, des moyens de réception du signal de réponse et d'extraction de l'indication relative à la zone de d'appartenance (ou zone de localisation).

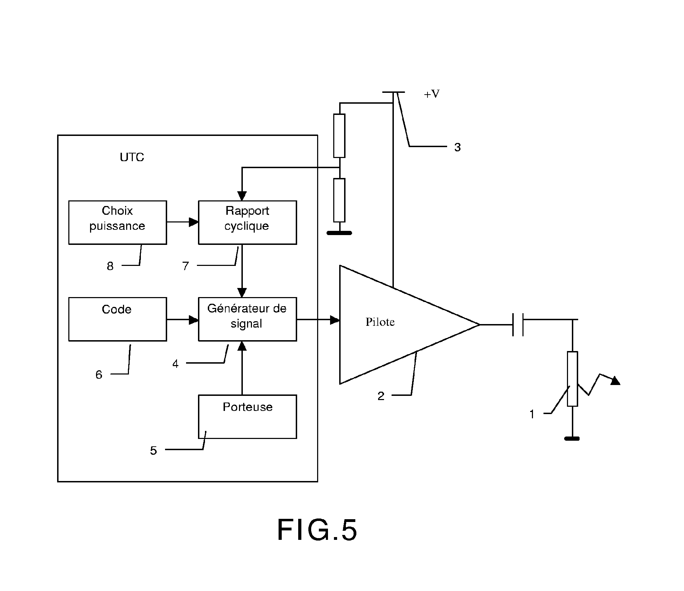

Des séquences successives à puissances distinctes peuvent être obtenues grâce à un circuit électonique tel que celui schématisé sur la figure 5. Dans ce circuit, une antenne d'émission 1 est connectée en série entre une masse et un pilote d'antenne 2, lequel est connecté à une tension d'alimentation +V, typiquement la batterie du véhicule, et reçoit un signal de commande en entrée. Le niveau de champ rayonné par l'antenne 1 étant proportionnel au courant traversant l'antenne 1, on peut obtenir des puissances distinctes à l'émission en modifiant le signal de commande en entrée du pilote 2. Une unité de traitement UTC est donc prévue en amont du pilote 2 pour délivrer un signal de commande modifié. Cette unité de traitement et de commande UTC comporte un générateur de signal 4 qui génère classiquement un signal de commande à partir d'une porteuse à une fréquence déterminée, typiquement à 125 KHz, délivrée par un générateur de fréquence , et d'un code délivré par un générateur de code 6. On peut par ailleurs se reporter à la demande EP 1 148 191 qui explique qu'il est possible d'obtenir un courant dans l'antenne modifié en faisant varier le rapport cyclique de la porteuse. Comme le courant de l'antenne 1 dépend également de la tension d'alimentation du pilote 2, il faut aussi tenir compte de cette dépendance pour définir les valeurs du rapport cycliques qu'il convient d'appliquer pour obtenir une puissance d'émission donnée. L'unité de traitement et de calcul UTC comprend donc un module de calcul 7 du rapport cyclique à utiliser en prenant en compte le choix de la puissance que l'on souhaite obtenir, délivré par un module 8, et la tension d'alimentation +V et ses fluctuations.

Du côté de l'identifiant, il est nécessaire de prévoir des moyens de réception et de traitement capables d'extraire la séquence de plus faible puissance reçue, et des moyens capables de générer un signal de réponse comprenant l'indication sur cette séquence

Dans le cas de figure le plus simple où les séquences sont émises successivement selon des puissances décroissantes, il suffit de considérer que l'identifiant ne retient que le niveau reçu en dernier.

## Revendications

1. Procédé de commande d'un système de sécurisation d'un espace clos, par exemple un véhicule automobile (V), le système étant du type mains-libres comportant un équipement fixe (F) par rapport à l'espace clos, adapté pour échanger avec un dispositif portatif (M) présent dans une zone d'observation déterminée, des signaux radiofréquences en vue d'une authentification, le procédé étant du type comportant une phase de localisation au cours de laquelle est déterminée la position du dispositif portatif (M) par rapport à au moins deux zones de localisation (Z₁, Z₂) définies comme des partitions de la zone d'observation selon la distance par rapport à l'espace clos, **caractérisé en ce que** la phase de localisation comporte les étapes suivantes :
- Emission depuis l'équipement fixe (F) d'un code (S_{E} ) comprenant au moins deux séquences successives de puissances distinctes définies de façon à ce que la séquence émise à la puissance maximum puisse être reçue dans une zone de réception comprenant les deux zones de localisation (Z₁, Z₂), et la séquence émise à la puissance minimum puisse être reçue dans une zone de réception comprenant seulement la zone de localisation la plus proche (Z₁) de l'espace clos;
- Réception par le dispositif portatif (M) d'au moins une séquence du code, et extraction d'une indication relative à la séquence de plus faible puissance reçue ;
- Emission depuis le dispositif portatif (M) vers l'équipement fixe (F) d'un signal de réponse comprenant ladite indication ;
- Réception par l'équipement fixe (F) du signal de réponse, extraction de ladite indication et déduction de la zone de localisation dans laquelle le dispositif portatif (M) est positionné.

2. Procédé de commande selon la revendication 1, **caractérisé en ce que** ladite indication correspond à un numéro relatif à la séquence de plus faible puissance reçue.

3. Procédé de commande selon l'une quelconque des revendications précédentes, **caractérisé en ce que** les séquences sont émises successivement selon les puissances décroissantes, et **en ce que** lextraction de l'indication consiste à déterminer la séquence reçue en dernier.

4. Procédé de commande selon l'une quelconque des revendications 1 ou 2, **caractérisé en ce que** les séquences sont émises successivement selon les puissances croissantes, et **en ce que** l'extraction de l'indication consiste à déterminer la séquence reçue en premier.

5. Procédé de commande selon l'une quelconque des revendications précédentes, **caractérisé en ce que** la zone d'observation est divisée en un nombre N supérieur à deux de zones de localisation réalisant une partition de la zone d'observation, et **en ce que** le code émis depuis l'équipement fixe (F) comprend N séquences de puissances distinctes, chaque puissance, depuis la puissance minimum jusqu'à la puissance maximum, étant choisie pour que la séquence correspondante soit reçue par une zone de localisation, respectivement depuis la plus proche jusqu'à la plus éloignée.

6. Procédé de commande selon l'une quelconque des revendications précédentes, **caractérisé en ce qu'**il comporte en outre une phase de commande d'un organe (O) de l'espace clos (V) fonction de la zone de localisation dans laquelle le dispositif portatif (M) est positionné.

7. Procédé de commande selon l'une quelconque des revendications précédentes, **caractérisé en ce que** les étapes de la phase de localisation sont réitérées plusieurs fois de manière à pouvoir effectuer un suivi de la trajectoire du dispositif portatif, et **en ce qu'**il comporte en outre une phase de commande d'un organe (O) de l'espace clos fonction de la trajectoire du dispositif portatif.

8. Procédé de commande selon la revendication 7, **caractérisé en ce que**, ledit organe étant un ouvrant (O) permettant l'accès à l'espace clos (V), les zones de localisation (Z₁, Z₂) sont définies par rapport à l'ouvrant de façon à ce que ladite phase de commande permette de déclencher soit le déverrouillage, voire l'ouverture automatique de l'ouvrant, soit le verrouillage, voire la fermeture automatique de l'ouvrant, lorsque le suivi de trajectoire révèle respectivement une approche ou un éloignement du dispositif portatif (M).

9. Procédé de commande selon l'une quelconque des revendications précédentes, **caractérisé en ce que** l'émission du code depuis l'équipement fixe (F) est effectuée en basse fréquence.

10. Procédé de commande selon l'une quelconque des revendications précédentes, **caractérisé en ce que** l'émission du signal de réponse depuis le dispositif portatif (M) est effectué en haute fréquence.

11. Procédé de commande selon l'une quelconque des revendications précédentes, dans lequel l'espace clos est constitué par un véhicule automobile.

12. Procédé de commande selon l'une quelconque des revendications 1 à 10, dans lequel l'espace clos est constitué par un garage.

13. Système de sécurisation d'un espace clos, par exemple un véhicule automobile, le système étant du type mains-libres comportant un équipement fixe (F) par rapport à l'espace clos, adapté pour échanger avec un dispositif portatif (M) présent dans une zone d'observation déterminée, des signaux radiofréquences en vue d'une authentification, le système comprenant des moyens de détermination de la position du dispositif portatif par rapport à au moins deux zones de localisation (Z₁, Z₂) définies comme des partitions de la zone d'observation selon la distance par rapport à l'espace clos, **caractérisé en ce que** :
- l'équipement fixe (F) comporte des moyens d'émission d'un code comprenant au moins deux séquences successives de puissances distinctes définies de façon à ce que la séquence émise à la puissance maximum puisse être reçue dans une zone de réception comprenant les deux zones de localisation, et la séquence émise à la puissance minimum puisse être reçue dans une zone de réception comprenant seulement la zone de localisation (Z₁) la plus proche de l'espace clos;
- le dispositif portatif comporte d'une part, des moyens de réception d'au moins une séquence du code, et d'extraction d'une indication relative à la séquence de plus faible puissance reçue, et d'autre part, des moyens d'émission vers l'équipement fixe (F) d'un signal de réponse comprenant ladite indication ; et
- l'équipement fixe (F) comporte en outre des moyens de réception du signal de réponse, des moyens d'extraction de ladite indication et de déduction de la zone de localisation dans laquelle le dispositif portatif (M) est positionné.
